# EUROPÄISCHE PATENTSCHRIFT

(11) **EP 3 046 789 B1**
(45) Veröffentlichungstag und Bekanntmachung des Hinweises auf die Patenterteilung: **10.10.2018**
(21) Anmeldenummer: 14750310.6
(22) Anmeldetag: 02.08.2014
(51) Int. Cl.: B60H 3/06, F24F 13/28, B01D 46/00, B01D 46/10, B01D 46/52

(54) **LUFTFILTER FÜR EINE BELÜFTUNGSEINRICHTUNG EINES KRAFTWAGENS UND VERFAHREN ZU DESSEN EINBAU**
AIR FILTER FOR A VENTILATION DEVICE OF A MOTOR VEHICLE AND METHOD FOR MOUNTING SAME
FILTRE À AIR POUR DISPOSITIF D'AÉRATION D'UN VÉHICULE AUTOMOBILE ET PROCÉDÉ POUR SON MONTAGE

(30) Priorität: 19.09.2013 DE 102013015630
(43) Veröffentlichungstag der Anmeldung: 27.07.2016
(73) Patentinhaber: Daimler AG, 70327 Stuttgart (DE)
(72) Erfinder: DENNINGER, Sabrina, 71679 Asperg (DE); ENDERLE, Wolfgang, 73269 Hochdorf (DE); PARVARESH, Negar, 70599 Stuttgart (DE)
(74) Vertreter: JENSEN & SON
(86) Internationale Anmeldenummer: PCT/EP2014/002138
(87) Internationale Veröffentlichungsnummer: WO 2015/039717

(56) Entgegenhaltungen:
- WO-A1-2011/047755
- DE-A1-102012 001 575
- DE-A1-102012 005 188

## Beschreibung

Die Erfindung betrifft einen Luftfilter für eine Belüftungseinrichtung eines Kraftwagens gemäß dem Oberbegriff von Patentanspruch 1. Des Weiteren betrifft die Erfindung ein Verfahren zum Einbau eines solchen Luftfilters gemäß dem Oberbegriff von Patentanspruch 9.

Aus der DE 10 2005 048 841 B3 ist bereits ein solcher Luftfilter für eine Belüftungseinrichtung eines Kraftwagens, beispielsweise einer Klima- oder Heizanlage, bekannt, welcher ein ein Filterelement haltendes Rahmenelement umfasst. Dieses Rahmenelement, welches das Filterelement außenumfangsseitig umgibt, weist zwei Stecköffnungen auf, über welche das Rahmenelement bzw. der gesamten Luftfilter unter Ausbildung jeweiliger Steckverbindungen mit jeweiligen dornartigen Führungselementen an einem Aufnahmeschacht der Belüftungseinrichtung verbindbar sind.

Die DE 10 2012 005 188 A1 beschreibt ein Filterelement gemäß Oberbegriff des Anspruchs 1 zum Einsetzen in ein Gehäuse einer Belüftungsanlage. Eine Stirnseite eines Faltenbalgs des Filterelements ist von einem Kantenstreifen gesäumt, in welchen Durchgänge für Führungszapfen eingebracht sind.

Bislang wird für jede Belüftungseinrichtung ein unterschiedlicher Luftfilter mit spezifisch ausgebildeten und angeordneten bzw. beabstandeten Stecköffnungen eingesetzt. Wird darüber hinaus beispielsweise ein Luftfilter, welcher entsprechende Stecköffnungen aufweist, in einer hierfür nicht vorgesehenen Belüftungseinrichtung eingesetzt und demzufolge keine Steckverbindung mit den jeweiligen Stecköffnungen des Luftfilters hergestellt, so kann über die jeweiligen Stecköffnungen eine Leckluftmenge hindurchgelangen. Dies bedeutet, dass von außen angesaugte ungefilterte Luft durch den Luftfilter in den Fahrzeuginnenraum gelangen kann, was zu Komforteinbußen für die Fahrzeuginsassen führen kann.

Aufgabe der vorliegenden Erfindung ist es daher, einen Luftfilter sowie ein Verfahren zum Einbau eines solchen Luftfilters zu schaffen, mittels welchen der Luftfilter bei verschiedenen Varianten von Belüftungseinrichtungen zum Einsatz kommen kann.

Diese Aufgabe wird erfindungsgemäß durch einen Luftfilter sowie ein Verfahren zum Einbau eines solchen Luftfilters mit den Merkmalen der Patentansprüche 1 bzw. 8 gelöst. Vorteilhafte Ausgestaltungen mit zweckmäßigen und nicht-trivialen Weiterbildungen der Erfindung sind in den übrigen Patentansprüchen angegeben.

Um einen Luftfilter der eingangs genannten Art zu schaffen, welcher bei unterschiedlichen Varianten von Belüftungseinrichtungen eingesetzt werden kann, ist es erfindungsgemäß vorgesehen, dass das Rahmenelement des Luftfilters wenigstens eine Vorbereitung zur Herstellung der Stecköffnung aufweist. Mit anderen Worten weist das Rahmenelement des erfindungsgemäßen Luftfilters zunächst keine Stecköffnung auf, sondern lediglich eine jeweilige Vorbereitung, in deren Bereich bei Bedarf bzw. in Abhängigkeit der jeweiligen Variante der Belüftungseinrichtung die jeweilige Stecköffnung eingebracht wird. Da somit im Ergebnis keine ungenutzten Stecköffnungen vorhanden sind, kann beispielsweise keine Leckluftmenge zum Fahrzeuginnenraum hin strömen, was zu Komforteinbußen der Fahrzeuginsassen führen könnte. Vielmehr kann der Luftfilter entweder ganz ohne Stecköffnungen verbaut werden oder aber nur mit solchen Stecköffnungen, welche bedarfsgerecht in Abhängigkeit der jeweiligen Variante der Belüftungseinrichtung vor dem Einbau im Bereich der jeweiligen Vorbereitungen eingebracht werden.

Die Vorbereitung für die Stecköffnung ist durch eine Materialschwächung eines zu entfernenden Materialbereichs des Rahmenelements gebildet. Hierbei wäre es insbesondere denkbar, die Vorbereitung bzw. den zu entfernenden Materialbereich durch eine Perforierung, eine umlaufende Nut oder Einkerbung, oder aber durch eine gesamte Materialschwächung zu bilden, so dass im Bedarfsfall die jeweilige Stecköffnung auf einfache Weise beispielsweise durch Herausbrechen, Herausknipsen oder Herausschneiden geschaffen werden kann.

Als Vorbereitung ist eine Mehrzahl von weiteren Möglichkeiten denkbar.

Eine erste Ausführungsform der Erfindung sieht dabei vor, dass die Vorbereitung für die jeweilige Stecköffnung eine Kennzeichnung eines zu entfernenden Materialbereichs des Rahmenelements umfasst. Die Kennzeichnung kann dabei insbesondere ein Farb- und/oder Materialauftrag auf das jeweilige Rahmenelement sein. Somit kann beispielsweise ein Monteur auf einfache Weise das Rahmenelement im Bereich der Kennzeichnung bzw. der Vorbereitung mit einer entsprechenden Stecköffnung versehen, in dem der entsprechend gekennzeichnete Materialbereich des Rahmenelements entfernt wird.

Insbesondere vorteilhaft hat es sich in diesem Zusammenhang gezeigt, wenn in dem zu entfernenden Materialbereich des Rahmenelements eine Handhabe wie beispielsweise eine Flasche, ein Griff oder ein Nippel an dem zu entfernenden Materialbereich vorgesehen sind. Somit kann der zu entfernende Materialbereich auf einfache Weise durch Ziehen, Drücken oder dergleichen an der Handhabe entfernt werden.

Alternativ oder zusätzlich zu der Kennzeichnung bzw. zusätzlich zu der Materialschwächung kann die Vorbereitung für die Stecköffnung auch einen Ansatz für ein Werkzeug zum Entfernen des Materialbereichs umfassen. Hier ist es beispielsweise denkbar, eine Zentrierung für einen Bohrer oder einen andersartigen Ansatz vorzusehen, welcher ggf. durch einen Farb- und/oder Materialauftrag gekennzeichnet ist und darüber hinaus ggf. auch eine Materialschwächung aufweisen kann, um ein einfaches Entfernen des entsprechenden Materialbereichs durch einen Werkzeugeinsatz zu erreichen.

In weiterer vorteilhafter Ausgestaltung der Erfindung ist dabei eine Mehrzahl von Vorbereitungen vorgesehen, um jeweilige Stecköffnungen zu schaffen. Dabei sieht eine bevorzugte Ausführungsform vor, dass eine Mehrzahl von variantenspezifischen Vorbereitungen vorgesehen ist, wobei jeweils zu entfernende Materialbereiche des Rahmenelements in Abhängigkeit der Variante der Belüftungseinrichtung entfernbar sind. Mit anderen Worten sind somit erfindungsgemäß mehrere Vorbereitungen vorgesehen, von welchen jeweils nur derjenige Materialbereich entfernt wird, in dem die entsprechende Stecköffnung genutzt wird. Die anderen Vorbereitungen bleiben somit unberührt bzw. es werden keine Stecköffnungen eingebracht, so dass hierüber keine Leckluft in den Fahrzeuginnenraum gelangen kann. Gegebenenfalls ist es dabei auch denkbar, alle Vorbereitungen ungenutzt zu lassen, bzw. keine Stecköffnungen in das Rahmenelement einzubringen, so dass bei einer Belüftungseinrichtung, welche auf Seiten des Aufnahmeschachts keine Führungselemente aufweist, der Luftfilter auch eingesetzt werden kann.

Im Ergebnis ist somit erkennbar, dass erfindungsgemäß ein Luftfilter geschaffen ist, welcher bei unterschiedlichen Varianten von Belüftungseinrichtungen, welche jeweils unterschiedliche dornartige Führungselemente oder gar keine Führungselemente aufweisen, einsetzbar ist.

Die vorstehend im Zusammenhang mit dem erfindungsgemäßen Luftfilter genannten Vorteile gelten dabei in ebensolcher Weise für das Verfahren gemäß Anspruch 8.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

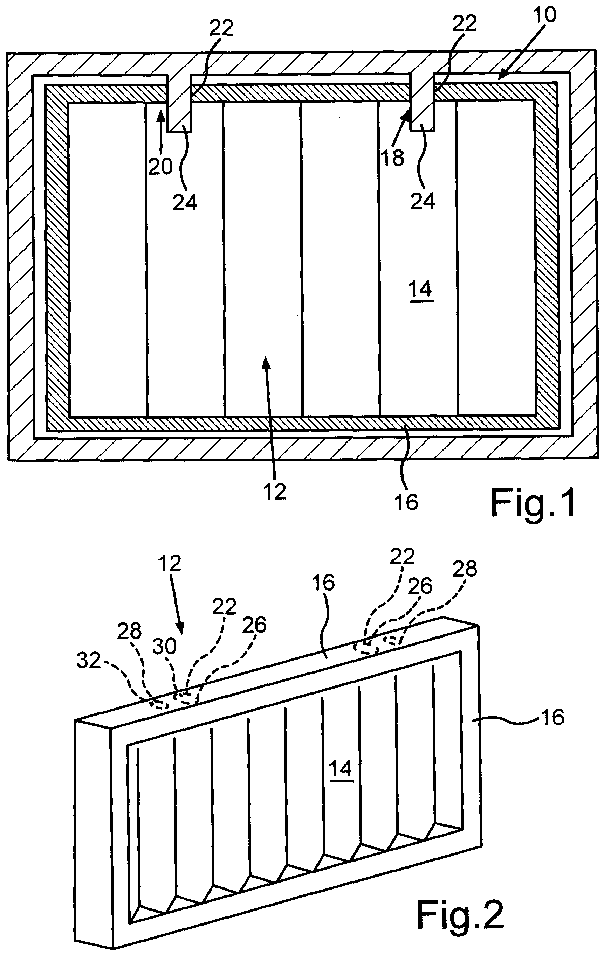

- Fig. 1: eine schematische Draufsicht auf einen geschnitten dargestellten Aufnahmeschacht einer Belüftungseinrichtung einer Heizungs- und/oder Klimaanlage eines Kraftwagens, in welchen ein Luftfilter eingesetzt ist, welcher ein ein Filterelement haltendes Rahmenelement umfasst, welches mittels von zwei Stecköffnungen unter Ausbildung einer Steckverbindung mit einem jeweiligen Führungselement an dem Aufnahmeschacht verbunden ist; und in
- Fig. 2: eine Perspektivansicht auf den separat dargestellten Luftfilter, wobei an dem Rahmenelement eine Mehrzahl von Vorbereitungen zur Herstellung jeweiliger Stecköffnung erkennbar sind, wobei jeweils zu entfernende Materialbereiche des Rahmenelements in Abhängigkeit der Variante der Belüftungseinrichtung im Bereich der jeweiligen variantenspezifischen Vorbereitung entfernbar sind.

In Fig. 1 ist in einer schematischen Schnittansicht ein Aufnahmeschacht 10 einer Belüftungseinrichtung einer Heizungs- und/oder Klimaanlage eines Kraftwagens dargestellt. Der Aufnahmeschacht 10 ist üblicherweise Teil eines sogenannten Klimakastens, welcher einerseits Öffnungen für Frischluft, welche von außerhalb des Kraftwagens angesaugt wird, und andererseits eine Ausgangsöffnung zum Weitertransport der gefilterten Luft in Richtung des Fahrzeuginnenraums umfasst.

In den Aufnahmeschacht 10 ist vorliegend ein Luftfilter 12 eingesetzt, welcher beispielsweise mittels einer nicht dargestellten Dichtung zum Aufnahmeschacht 10 hin abgedichtet ist.

Dieser Luftfilter 12 ist in Fig. 2 in einer separaten Perspektivansicht schematisch angedeutet. Der Luftfilter 12 umfasst als wesentliche Bauteile ein Filterelement 14, welches in einem vorliegend umlaufend ausgebildeten Rahmenelement 16 aufgespannt bzw. gehalten ist. Dabei ist es im Rahmen der Erfindung zu berücksichtigen, dass das Rahmenelement 16 nicht zwingender Maßen um das Filterelement 14 umlaufend ausgebildet sein muss. Es reicht ggf. auch nur eine partielle Erstreckung entlang des Filterelements 14.

Wie nun aus Fig. 1 erkennbar ist, ist der Luftfilter 12 derart in den Aufnahmeschacht 10 eingesetzt, dass zwei Steckverbindungen 18, 20 zwischen dem Luftfilter 12 und dem Aufnahmeschacht 10 ausgebildet sind. Genauer gesagt sind hierzu auf Seiten des Luftfilters 12 zwei Stecköffnungen 22 in das Rahmenelement 16 eingebracht, in welche ein jeweiliges Führungselement 24 in Form eines Dorns, der vorliegend einteilig mit dem Aufnahmeschacht 10 ausgebildet ist, unter Ausbildung der jeweiligen Steckverbindung 18, 20 eingesteckt ist. Das jeweilige Führungselement 24 dient dabei beim Einbau des Luftfilters 12 als Führung zum Erreichen einer genauen Positionierung des Luftfilters 12 und anschließend zur Halterung bzw. Fixierung des Luftfilters 12 in einer definierten Position. Hierbei sind vorliegend die jeweiligen Stecköffnungen 22 mit den korrespondierenden Führungselementen 24 mit leichtem Spiel verbunden. Alternativ werden auch andere gängige Arten von Steckverbindungen denkbar.

Wie nun aus Fig. 2 erkennbar ist, weist der Luftfilter 12 in seiner nicht eingebauten, ursprünglichen bzw. ausgelieferten Form jeweilige Vorbereitungen 26, 28 im Bereich des Rahmenelements 16 auf, in deren Bereich die jeweilige Stecköffnung 22 hergestellt werden kann. Demzufolge weist der Luftfilter 12 zunächst die Stecköffnungen 22 noch nicht auf, sondern lediglich die Vorbereitungen 26, 28 in deren Bereich die Stecköffnungen 22 durch eine den Luftfilter 12 montierende Person eingebracht werden können.

Die Vorbereitungen 26, 28 können dabei beispielsweise eine jeweilige Kennzeichnung eines zu entfernenden Materialbereichs des Rahmenelements 16 umfassen. Hierunter ist beispielsweise ein Farb- und/oder Materialauftrag auf das Rahmenelement 16 denkbar, welcher in seiner Geometrie beispielsweise der Form der Stecköffnung 22 entspricht. Demzufolge wäre es beispielsweise denkbar, einen entsprechenden farbigen Punkt oder eine farbige Erhöhung an dem Rahmenelement 16 vorzusehen, welches die spätere Stecköffnung 22 bzw. den zu entfernenden Materialbereich des Rahmenelements 16 markiert.

Die jeweilige Vorbereitung 26, 28 ist durch eine Materialschwächung eines zu entfernenden Materialbereichs des Rahmenelements 16 gebildet. So wäre es beispielsweise denkbar, im Rahmenelement 16 eine entsprechende Perforation, eine (umlaufende) Nut oder Einkerbung, oder aber eine flächige - beispielsweise kreisrunde - Materialverjüngung vorzusehen, welche den zu entfernenden Materialbereich umgrenzt bzw. bestimmt. Beispielsweise wären hierbei ringförmige Perforationen, Einkerbungen oder Nuten denkbar, um einen kreisförmigen Materialbereich aus dem Rahmenelement 16 auszusparen.

Dabei kann es insbesondere auch vorgesehen sein, dass im Bereich des zu entfernenden Materials, also im zu entfernenden Materialbereich des Rahmenelements 16, eine Handhabe wie beispielsweise eine Lasche, ein Griff oder ein Nippel vorgesehen sind, so dass durch einfachen Zug oder Druck der entsprechende, zu entfernende Materialbereich ausgenommen werden kann.

Alternativ oder zusätzlich sowohl zur Kennzeichnung als auch zur Materialschwächung kann als Vorbereitung 26, 28 für die jeweilige Stecköffnung 22 auch ein Ansatz für ein Werkzeug zum Entfernen des Materialbereichs des Rahmenelements 16 vorgesehen sein. So ist es beispielsweise denkbar, eine Zentrierung oder dergleichen als Vorbereitung im Rahmenelement 16 vorzusehen, so dass beispielsweise mittels eines Bohrers auf einfache Weise die jeweilige Stecköffnung 22 eingebracht werden kann. Der Ansatz kann dabei zudem mit einer entsprechenden Kennzeichnung oder aber auch mit einer Materialschwächung versehen sein, so dass mittels des Werkzeugs ein einfaches Entfernen des jeweiligen Materialbereichs zur Herstellung der Stecköffnung 22 möglich ist.

Wie anhand von Fig. 2 erkennbar ist, sind vorliegend zwei kreisförmige Vorbereitungen 26 vorgesehen, welche jeweils einen zu entfernenden Materialbereich 30 begrenzen, welcher auf die vorgeschriebene Weise zur Herstellung der jeweiligen Stecköffnung 22 entfernt werden können. Wird dieser jeweilige Materialbereich 30 entfernt, so kann die in Fig. 1 gezeigte jeweilige Steckverbindung 18, 20 erzeugt werden.

Alternativ hierzu sind jedoch in dem Rahmenelement 16 des in Fig. 2 gezeigten Luftfilters 12 weitere Vorbereitungen 28 vorgesehen, welche vorliegend beispielsweise rechteckförmig ausgebildet sind. Soll der Luftfilter 12 beispielsweise bei einer anderen Belüftungseinrichtung zum Einsatz kommen, so können variantenspezifisch nicht die Materialbereiche 30 der Vorbereitungen 26 entfernt werden, sondern jeweilige Materialbereiche 32 der Vorbereitungen 28. Somit sind vorliegend variantenspezifische Vorbereitungen 26, 28 geschaffen, welche es ermöglichen, lediglich diejenigen Materialbereiche 30 oder 32 zu entfernen, welche für die jeweils erforderlichen Steckverbindungen 18, 20 erforderlich sind. Somit kann der Luftfilter 12 bei unterschiedlichen Varianten von Belüftungseinrichtungen, beispielsweise bei unterschiedlichen Fahrzeugbaureihen, zum Einsatz kommen. Dieser hat den Vorteil, dass Materialbereiche 30, 32 jeweiliger Vorbereitungen 26, 28, welche nicht gebraucht werden, nicht entfernt werden und somit verschlossen bleiben. Mit anderen Worten werden die jeweiligen Stecköffnungen 22 nur im Bereich der jeweiligen Vorbereitungen 26, 28 eingebracht, welche gemäß der eingesetzten Variante der Belüftungseinrichtung gebraucht werden. Dies hat insbesondere den Vorteil, dass keine Stecköffnungen 22 bestehen, welche nicht gebraucht werden und über welche Leckluft in den Fahrzeuginnenraum gelangen könnte und dass dennoch ein Luftfilter 12 geschaffen ist, welcher bei unterschiedlichen Varianten der Belüftungseinrichtung, beispielsweise bei verschiedenen Fahrzeugbaureihen, zum Einsatz kommen kann.

Vor dem Einbau des Luftfilters 12 in den jeweiligen Aufnahmeschacht 10 der entsprechenden Belüftungseinrichtung werden demzufolge die jeweiligen Stecköffnungen 22 durch Entfernen des jeweiligen Materialbereichs 30, 32 der entsprechenden Vorbereitung 26, 28 in dem Rahmenelement 16 erzeugt, und anschließend unter Ausbildung der jeweiligen Steckverbindung 18, 20 die entsprechende Stecköffnung 22 mit dem korrespondierenden Führungselement 24 verbunden bzw. auf dieses aufgesteckt.

Der vorliegende Luftfilter 12 bietet darüber hinaus den Vorteil, dass dieser auch eingesetzt werden kann, wenn keine Steckverbindung 18, 20 geschaffen werden soll, und demzufolge keine Stecköffnung 22 erforderlich ist. In diesem Fall hat der vorliegenden Luftfilter 12 wiederum den Vorteil, dass somit keine Stecköffnungen 22 vorhanden sind, über welche Leckluft von außerhalb des Fahrzeugs in den Fahrzeuginnenraum gelangen könnte.

## Patentansprüche

1. Luftfilter (12) für eine Belüftungseinrichtung eines Kraftwagens, mit einem ein Filterelement (14) haltenden Rahmenelement (16), welches mittels wenigstens einer Stecköffnung (22) unter Ausbildung einer Steckverbindung (18, 20) mit einem Führungselement (24) an einem Aufnahmeschacht (10) der Belüftungseinrichtung verbindbar ist,
**dadurch gekennzeichnet, dass**
das Rahmenelement (16) wenigstens eine Vorbereitung (26, 28) zur Herstellung der Stecköffnung (22) aufweist, wobei die Vorbereitung (26, 28) für die Stecköffnung (22) eine Materialschwächung eines zu entfernenden Materialbereichs (30, 32) des Rahmenelements (16) umfasst.

2. Luftfilter (12) nach Anspruch 1,
**dadurch gekennzeichnet, dass**
die Vorbereitung (26, 28) für die Stecköffnung (22) eine Kennzeichnung eines zu entfernenden Materialbereichs (30, 32) des Rahmenelements (16) umfasst.

3. Luftfilter (12) nach Anspruch 2,
**dadurch gekennzeichnet, dass**
die Kennzeichnung ein Farb- und/oder Materialauftrag auf das Rahmenelement (16) umfasst.

4. Luftfilter (12) nach einem der vorhergehenden Ansprüche,
**dadurch gekennzeichnet, dass**
in dem zu entfernenden Materialbereich (30, 32) des Rahmenelements (16) eine Handhabe vorgesehen ist.

5. Luftfilter (12) nach einem der vorhergehenden Ansprüche,
**dadurch gekennzeichnet, dass**
die Vorbereitung (26, 28) für die Stecköffnung (22) einen Ansatz für ein Werkzeug zum Entfernen eines Materialbereichs (30, 32) des Rahmenelements umfasst.

6. Luftfilter (12) nach einem der vorhergehenden Ansprüche,
**dadurch gekennzeichnet, dass**
eine Mehrzahl von Vorbereitungen (26, 28) vorgesehen ist.

7. Luftfilter (12) nach Anspruch 6,
**dadurch gekennzeichnet, dass**
eine Mehrzahl von variantenspezifischen Vorbereitungen (26, 28) vorgesehen ist, wobei jeweils zu entfernende Materialbereiche (30, 32) des Rahmenelements (16) in Abhängigkeit der Variante der Belüftungseinrichtung entfernbar sind.

8. Verfahren zum Einbau eines Luftfilters (12) für eine Belüftungseinrichtung eines Kraftwagens, bei welchem der Luftfilter (12) mittels wenigstens einer Stecköffnung (22) in einem ein Filterelement (14) haltenden Rahmenelement (16) unter Ausbildung einer Steckverbindung (18, 20) mit einem Führungselement (24) an einem Aufnahmeschacht (10) der Belüftungseinrichtung verbunden wird,
**dadurch gekennzeichnet, dass**
vor dem Einbau des Luftfilters (12) die wenigstens eine Stecköffnung (22) durch Entfernen eines Materialbereichs (30, 32) einer Vorbereitung (26, 28) in dem Rahmenelement (16) erzeugt wird, wobei die Vorbereitung (26, 28) für die Stecköffnung (22) durch eine Materialschwächung eines zu entfernenden Materialbereichs (30, 32) des Rahmenelements (16) gebildet wird.

## Claims

1. Air filter (12) for a ventilation device of a motor vehicle, comprising a frame element (16), which holds a filter element (14) and can be connected to a guide element (24) at a receptacle shaft (10) of the ventilation device by means of at least one plug-in opening (22) while forming a plug-in connection,
**characterised in that**
the frame element (16) comprises at least one arrangement (26, 28) for producing the plug-in opening (22), the arrangement (26, 28) for the plug-in opening (22) comprising a material weakening of a material area (30, 32) of the frame element (16) which is to be removed.

2. Air filter (12) according to claim 1,
**characterised in that**
the arrangement (26, 28) for the plug-in opening (22) includes a marking of a material area (30, 32) of the frame element (16) which is to be removed.

3. Air filter (12) according to claim 2,
**characterised in that**
the marking comprises the application of paint and/or material to the frame element (16).

4. Air filter (12) according to any of the preceding claims,
**characterised in that**
a handle is provided in the material area (30, 32) of the frame element (16) which is to be removed.

5. Air filter (12) according to any of the preceding claims,
**characterised in that**
the arrangement (26, 28) for the plug-in opening (22) comprises a lug for a tool for removing a material area (30, 32) of the frame element.

6. Air filter (12) according to any of the preceding claims,
**characterised in that**
a plurality of arrangements (26, 28) is provided.

7. Air filter (12) according to claim 6,
**characterised in that**
a plurality of variant-specific arrangements (26, 28) is provided, wherein the material areas (30, 32) of the frame element (16) which are to be removed can in each case be removed in accordance with the variant of the ventilation device.

8. Method for the installation of an air filter (12) for a ventilation device of a motor vehicle, wherein the air filter (12) is connected to a guide element (24) at a receptacle shaft (10) of the ventilation device by means of at least one plug-in opening (22) in a frame element (16) holding a filter element (14) while forming a plug-in connection,
**characterised in that**
before the installation of the air filter (12) the at least one plug-in opening (22) is produced by removing a material area (30, 32) of an arrangement (26, 28) in the frame element (16), wherein the arrangement (26, 28) for the plug-in opening (22) is represented by a material weakening of a material area (30, 32) of the frame element (16) which is to be removed.

## Revendications

1. Filtre à air (12) pour un dispositif d'aération d'un véhicule automobile comprenant un élément de cadre (16) retenant un élément filtrant (14), qui peut être relié au moyen d'au moins une ouverture d'emboîtement (22) par formation d'une liaison d'emboîtement (18, 20) à un élément de guidage (24) dans un compartiment de réception (10) du dispositif d'aération, **caractérisé en ce que** l'élément de cadre (16) présente au moins une préparation (26, 28) destinée à fabriquer l'ouverture d'emboîtement (22), la préparation (26, 28) comprenant pour l'ouverture d'emboîtement (22) un affaiblissement de matériau d'une zone de matériau à éliminer (30, 32) de l'élément de cadre (16).

2. Filtre à air (12) selon la revendication 1, **caractérisé en ce que** la préparation (26, 28) pour l'ouverture d'emboîtement (22) comprend un marquage d'une zone de matériau à éliminer (30, 32) de l'élément de cadre (16).

3. Filtre à air (12) selon la revendication 2, **caractérisé en ce que** le marquage comprend une application de matériau et/ou de couleur sur l'élément de cadre (16).

4. Filtre à air (12) selon l'une quelconque des revendications précédentes, **caractérisé en ce qu'**on prévoit une manipulation dans la zone de matériau à éliminer (30, 32) de l'élément de cadre (16).

5. Filtre à air (12) selon l'une quelconque des revendications précédentes, **caractérisé en ce que** la préparation (26, 28) pour l'ouverture d'emboîtement (22) comprend un épaulement pour un outil afin d'éliminer une zone de matériau (30, 32) de l'élément de cadre.

6. Filtre à air (12) selon l'une quelconque des revendications précédentes, **caractérisé en ce qu'**on prévoit une pluralité de préparations (26, 28).

7. Filtre à air (12) selon la revendication 6, **caractérisé en ce qu'**on prévoit une pluralité de préparations (26, 28) en fonction du type, des zones de matériau (30, 32) de l'élément de cadre (16) doivent être respectivement éliminées (16) en fonction du type du dispositif d'aération.

8. Procédé de montage d'un filtre à air (12) pour un dispositif d'aération d'un véhicule automobile, le filtre à air (12) étant relié au moyen d'au moins une ouverture d'emboîtement dans l'élément de cadre (16) retenant un élément filtrant (14) par formation d'une liaison d'emboîtement (18, 20) à un élément de guidage (24) dans un compartiment de réception (10) du dispositif d'aération, **caractérisé en ce qu'**avant le montage du filtre à air (12) l'au moins une ouverture d'emboîtement (22) est produite par élimination d'une zone de matériau (30, 32) d'une préparation (26, 28) dans l'élément de cadre (16), la préparation (26, 28) pour l'ouverture d'emboîtement (22) étant formée par un affaiblissement de matériau d'une zone de matériau (30, 32) à éliminer de l'élément cadre (16).
